# EUROPEAN PATENT APPLICATION

(11) **EP 4 734 167 A1**
(43) Date of publication of application: **29.04.2026**
(21) Application number: 24925008.5
(22) Date of filing: 15.11.2024
(51) Int. Cl.: H01M 4/134, H01M 4/133, H01M 4/1395, H01M 4/1393, H01M 4/04, H01M 10/0562, H01M 10/0585, H01M 10/052, H01M 4/02

(54) **ANODE ASSEMBLY, MANUFACTURING METHOD THEREFOR, AND ALL-SOLID-STATE BATTERY COMPRISING SAME**

(30) Priority: 13.02.2024 KR 20240020272
(71) Applicant: LG Energy Solution, Ltd., Seoul 07335 (KR)
(72) Inventor: YOM, Jeeho, Daejeon 34122 (KR); LEE, Hye Jin, Daejeon 34122 (KR)
(74) Representative: Goddar, Heinz J.
(86) International application number: PCT/KR2024/018106
(87) International publication number: WO 2025/173864

(57) **Abstract**

The present invention relates to an anode assembly, a manufacturing method therefor, and an all-solid-state battery comprising same, the anode assembly comprising a first layer that includes LiX, a second first layer that includes amorphous carbon, and an anode current collector, wherein X is a halogen element. According to the present invention, the anode assembly having excellent charge and discharge efficiency and capacity retention rate, the manufacturing method therefor, and the all-solid-state battery comprising same can be provided.

## Description

### TECHNICAL FIELD

The present disclosure relates to an anode assembly, an all-solid-state battery including the same, and a method of manufacturing the same.

The present application claims the benefit of and priority to Korean Patent Application Nos. 10-2024-0020272, filed on February 13, 2024 with the Korean Intellectual Property Office, the disclosure of which is incorporated herein by reference in its entirety for all purposes as if fully set forth herein.

### BACKGROUND

In recent years, all-solid-state batteries having high energy density and stability have been proposed due to industrial requirements, and efforts to further enhance these characteristics have continued. For example, using lithium as an anode active material to increase the energy density of an all-solid-state battery is currently under study.

As a method for using lithium as an anode active material, approaches have been proposed that involve either using lithium or a lithium alloy as the anode active material layer in the battery manufacturing process, or forming a lithium layer during the charging process without having a separate anode active material layer on an anode current collector.

However, when lithium is used as the anode active material, lithium (metal lithium) precipitates on the anode side during charging. As the charging and discharging processes are repeated, lithium dendrites grow through gaps in the solid electrolyte layer. The growth of dendrites can lead to short circuits or reduced battery capacity, posing significant problems.

Therefore, there is a need to resolve the above problems in order to commercialize the method of using lithium as an anode active material.

The background description provided herein Is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

### Technical Goals

The present disclosure is to solve the above problem and an object of the present disclosure is to provide an anode assembly providing excellent charge/discharge efficiency and capacity retention rate, an all-solid-state battery including the same, and a method of manufacturing the same.

### Technical solutions

According to an aspect of the present disclosure, there is provided an anode assembly comprising a first layer comprising a lithium halide, LiX, where X is a halogen element; a second layer comprising amorphous carbon; and an anode current collector.

In an embodiment, the first layer may consist essentially of LiX.

In an embodiment, the first layer may include 96 wt% or more of LiX based on a total weight of the first layer.

In an embodiment, the first layer may be more adjacent to the anode current collector than the second layer.

In an embodiment, the thickness of the first layer may be in the range of 10 nm to 990 nm.

In an embodiment, the thickness of the second layer may be in the range of 1 *µ*m to 50 *µ*m.

In an embodiment, a ratio of a thickness of the second layer to a thickness of the first layer may be in the range of 10 to 200.

In an embodiment, LiX may be lithium fluoride (LiF) or lithium chloride (LiCl).

In an embodiment, the amorphous carbon may be one or more selected from the group consisting of carbon black, acetylene black, furnace black, ketjen black, and graphene.

In an embodiment, the second layer may further comprise a binder.

In an embodiment, the anode assembly may further comprise a third layer between the first layer and the second layer, and the third layer may comprise a lithiophilic material.

In an embodiment, a thickness of the third layer may be in the range of 10 nm to 990 nm.

In an embodiment, the second layer may further comprise a lithiophilic material.

According to another aspect of the present disclosure, there is provided an all-solid-state battery comprising a cathode, a solid electrolyte layer, and the anode assembly according to the above said embodiments.

In an embodiment, the all-solid-state battery may be an anodeless all-solid-state battery which uses lithium or a lithium alloy as an anode active material.

In an embodiment, the solid electrolyte layer may comprise a sulfide-based solid electrolyte.

In an embodiment, the sulfide-based solid electrolyte may be one or more selected from the group consisting of Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q}, wherein p and q are positive numbers, and M is P, Si, Ge, B, Al, Ga, or In, Li₂S-SiS₂-P₂S₅-LiI, Li₂S-P₂S₅, Li₂S-P₂S₅-LiX, wherein X is a halogen element, Li₂S-B₂S₃, Li₂S-P₂S₅-ZₘSₙ, wherein m and n are positive numbers, and Z is Ge, Zn, or Ga, Li₂S-GeS₂, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

In an embodiment, the all-solid-state battery of the present disclosure may have a charge and discharge efficiency of 90% or more.

In an embodiment, the all-solid-state battery of the present disclosure may have a capacity retention rate after 50 cycles of 90% or more.

In an embodiment, the all-solid-state battery of the present disclosure may have a specific capacity after 50 cycles of 150 mAh/g or more.

According to further another aspect of the present disclosure, there is provided a method for manufacturing an anode assembly, the method comprising forming a first layer and a second layer on an anode current collector, wherein the first layer comprises a lithium halide, LiX, where X is a halogen element, and the second layer comprises amorphous carbon.

In an embodiment, the step of forming the second layer may comprise applying a slurry comprising amorphous carbon onto the first layer and drying the slurry.

In an embodiment, the slurry may further comprise a binder and a solvent.

### Effect of Invention

According to the present disclosure, there is provided an anode assembly providing excellent charge/discharge efficiency and capacity retention rate, an all-solid-state battery including the same, and a method of manufacturing the same.

### BRIEF DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a graph showing the assessment results of charge/discharge characteristics of Example and Comparative Example 1.
FIG. 2 is a graph showing the assessment results of charge/discharge characteristics of Example and Comparative Example 2.
FIG. 3 is a graph showing the assessment results of charge/discharge characteristics of Example and Comparative Example 3.
FIG. 4 is a graph showing the assessment results of a specific capacity according to cycles of all-solid-state batteries of Example and Comparative Examples 1 to 3.
FIG. 5 is a graph showing the assessment results of a capacity retention rate according to cycles of all-solid-state batteries of Example and Comparative Examples 1 to 3.

### DETAILED DESCRIPTION

Terms and words used in the present disclosure and the claims should not be construed to be limited to ordinary or dictionary meanings, but should be construed to be meanings and concepts corresponding to the technical idea of the present disclosure based on the principle that an inventor may appropriately define the concept of terms in order to explain his or her invention in the best way.

Therefore, it should be understood that the configuration of the example described in the present disclosure is only one most preferable example of the present disclosure and does not represent all the technical ideas of the present disclosure, and therefore, various equivalents and modified examples may exist to replace them at the time of application of the present disclosure.

In the present disclosure, the singular expression includes the plural expression unless the context clearly indicates otherwise.

In the present disclosure, when a part "comprises" a component, this means that other components may be further included rather than excluding other components unless otherwise stated. Thus, for example, a composition comprising Compound A may include compounds other than Compound A. However, the term "comprising" also encompasses, in particular embodiments, more limited expressions "~ essentially/necessarily consisting of" and "~ consisting of," for example, "a composition comprising Compound A" may also (essentially/ necessarily) consist of Compound A.

In connection therewith, it should be understood that the term "include" or "have" as used herein is intended to designate the existence of any implemented feature, number, step, component or a combination thereof, and does not exclude in advance the possibility of the existence or addition of one or more other features, numbers, steps, components or a combination thereof.

In the present disclosure, when any layer is located on another layer or between any other layers, this includes not only the case where any layer is in contact with another layer, but also the case where another layer or material exists between the two layers.

When an amount, concentration, or other value or parameter is given herein as an enumeration of ranges, preferable ranges or preferable upper and lower values, it is to be understood that the disclosure specifically describes all ranges formed from any pair of an upper range limit or a preferable value and a lower range limit or a preferable value, regardless of whether it describes a separate range. If the range of numerical values is referred to herein, unless otherwise indicated, for example, if there is no limiting terms such as more, less, etc., the range is intended to include the endpoint values thereof and all integers and fractions within the range. The scope of the present disclosure is not intended to be limited to a specific value referred to when defining a range.

Among the properties mentioned herein, when the measurement temperature has an effect on a property, the property is measured at room temperature unless otherwise specified. The term "room temperature" may refer to a natural temperature that is not heated or cooled, for example, any temperature in the range of about 10°C to 30°C, or a temperature of about 23°C or about 25°C. In addition, unless otherwise specified, the unit of temperature in the present disclosure is °C.

Further, among the properties mentioned herein, when the measurement pressure has an effect on a property, the property is measured at normal pressure, *i.e.* atmospheric pressure (about 1 atmosphere), unless otherwise specified.

In the present disclosure, the term "all-solid-state-battery" may mean an all-solid secondary battery, and may be referred to as a cell, a secondary battery, a battery, or the like.

In the present disclosure, the term "anodeless all-solid-state-battery" refers to an all-solid-battery in which there is no pre-formed anode active material layer on an anode current collector and lithium is precipitated on the anode current collector during charging of the all-solid-state battery to form a lithium layer or a lithium alloy layer, and the lithium or lithium alloy functions as an anode active material of the all-solid-state battery.

A first aspect of the present disclosure relates to an anode assembly.

The anode assembly of the present disclosure may comprise a first layer comprising a lithium halide, LiX, where X is a halogen element; a second layer comprising amorphous carbon; and an anode current collector.

The halogen element, X, may be selected from the group consisting of F, Cl, Br, and I.

The first layer may consist essentially of LiX. The first layer being essentially formed of LiX may mean that the first layer is essentially constituted of LiX, or, may mean that the first layer includes LiX as a main component.

More specifically, The first layer being essentially formed of LiX may mean that the first layer may include LiX as a main component and impurities as a remainder. For example, the first layer being essentially formed of LiX may mean that the first layer includes LiX in an amount of 90 wt% or more, 91 wt% or more, 92 wt% or more, 93 wt% or more, 94 wt% or more, 95 wt% or more, 96 wt% or more, 97 wt% or more, 98 wt% or more, or 99 wt% or more, and in another example, 99.5 wt% or more, 99.8 wt% or more, or 99.9 wt % or more based on a total weight of the first layer, but not limited thereto.

In another example, the first layer may be characterized by comprising 96 wt% or more of the LiX based on a total weight of the first layer. In another example, the first layer may comprise 97 wt % or more, 98 wt % or more, 99 wt % or more, 99.9 wt % or more, or 99.99 wt % or more, and most preferably 100 wt % of LiX based on a total weight of the first layer, but is not intended to completely exclude any unintended impurities. In other words, the first layer may be characterized by comprising only LiX. The first layer may be formed, for example, by a deposition method to be described later, but is not limited thereto. According to the present disclosure, the first layer comprises LiX within the above range, and preferably comprises only LiX, such that a thinner layer is manufactured than a layer comprising a material other than LiX (e.g., a binder, etc.), thereby minimizing the thickness of the anode assembly, preventing the capacity and charge/discharge speed from being reduced due to a resistance caused by a binder, etc., and contributing to energy density improvement.

The anode assembly of the present disclosure, for example, may comprise the first layer and the second layer as a coating layer, and the coating layer may be referred to as an anode-free coating layer, but not limited thereto.

In the present disclosure, the term "coating layer" refers to a layer formed on an anode current collector and/or between an anode current collector and a solid electrolyte layer in an all-solid-state battery using lithium or a lithium alloy as an anode active material, in which there is no separate anode active material layer on the anode current collector formed in a battery manufacturing process and lithium is absorbed into the coating layer and precipitated between the anode current collector and the coating layer after charging capacity of the coating layer is exceeded to form a lithium layer or a lithium alloy layer ("lithium (alloy) layer") during a charging process. Meanwhile, the lithium of the coating layer and/or the lithium (alloy) layer is ionized during discharging to move toward the cathode. That is, the configuration and operating mechanism of the anode assembly and the all-solid-state battery of the present disclosure may be different from the conventional art where an anode active material layer is formed on an anode current collector in a battery manufacturing process. The coating layer may serve as a protective layer for the lithium (alloy) layer that prevents the lithium (alloy) layer formed during the charging process from being in direct contact with a solid electrolyte layer to be described later and suppress growth of lithium dendrite, through which short circuit of the all-solid-state battery may be removed and performance and the like may be improved.

The anode assembly of the present disclosure may sequentially comprise the anode current collector, the first layer comprising LiX, wherein X is a halogen element, and the second layer comprising amorphous carbon.

In the present disclosure, the expression that the anode assembly comprises layer A, layer B, and layer C sequentially is merely for indicating the order of the lamination, and does not exclude that another separate layer may be additionally interposed between the layers A, B, and C.

The anode assembly, as described above, may include the anode current collector, the first layer, and the second layer, but not limited thereto.

Moreover, the anode assembly of the present disclosure may include a structure in which the anode current collector, the first layer, and the second layer are sequentially stacked, but not limited thereto. For example, the first layer may be disposed on a surface of the anode current collector, and the second layer may be disposed on a surface of the first layer. That is, the first layer may be disposed between the anode current collector and the second layer.

Further, the first layer may be disposed on each of the opposite surfaces of the anode current collector, and the second layer may be disposed on the first layer disposed on the each of the opposite surfaces of the anode current collector.

In the anode assembly, the first layer may be more adjacent to the anode current collector than the second layer.

The anode assembly of the present disclosure may include a structure in which the first layer and the second layer are alternately stacked in a vertical direction on the anode current collector, or may include a structure in which the first layer and the second layer are alternately stacked in a horizontal direction on the anode current collector, but not limited thereto.

The thickness of the first layer may be, for example, in the range of 10 nm to 990 nm. In the present disclosure, the thickness of the layer may be an average thickness, a minimum thickness and/or a maximum thickness, which may be measured, for example, by SEM, and is not limited thereto. In another example, the thickness of the first layer may be 20 nm or more, 30 nm or more, 40 nm or more, 50nm or more, 60 nm or more, 70 nm or more, 80 nm or more, 90 nm or more, 100 nm or more, 110 nm or more, 120 nm or more, 130 nm or more, 140 nm or more, 150 nm or more, 160 nm or more, 170 nm or more, 180 nm or more, 190 nm or more, 200 nm or more, 210 nm or more, 220 nm or more, 230 nm or more, or 240 nm or more, or 950 nm or less, 900 nm or less, 850 nm or less, 800 nm or less, 750 nm or less, 700 nm or less, 650 nm or less, 600 nm or less, 550 nm or less, 500 nm or less, 450 nm or less, 400 nm or less, 350 nm or less or 300 nm or less. By controlling the thickness of the first layer in the above range, an all-solid-state battery having high charge/discharge efficiency and capacity retention rate may be provided.

The thickness of the second layer may be, for example, in the range of 1 *µ*m to 50 *µ*m. In another example, the thickness of the second layer may be 2 *µ*m or more, 3 *µ*m or more, 4 *µ*m or more, 5 *µ*m or more, 6 *µ*m or more, 7 *µ*m or more, 8 *µ*m or more, or 9 *µ*m or more, or 45 *µ*m or less, 40 *µ*m or less, 35 *µ*m or less, 30 *µ*m or less, 25 *µ*m or less, 20 *µ*m or less, or 15 *µ*m or less. By controlling the thickness of the second layer in the above range, it is possible to prevent the metal layer formed between the first layer and the second layer from being in direct contact with the solid electrolyte layer during charging, and at the same time, to mitigate volume expansion during charging, and to improve the uniformity of the metal layer.

A ratio of the thickness of the second layer to the thickness of the first layer may be, for example, in the range of 10 to 200. In another example, the ratio of the thickness of the second layer to the thickness of the first layer may be 15 or more, 20 or more, 25 or more, 30 or more, or 35 or more, or 180 or less, 160 or less, 140 or less, 120 or less, 100 or less, 80 or less, or 60 or less. By controlling the thickness ratio of the first layer and the second layer to the above range, the cycle characteristics of the all-solid-state battery may be improved.

For example, the LiX may be LiF or LiCl.

For example, the amorphous carbon may be at least one selected from the group consisting of carbon black, acetylene black, furnace black, ketjen black, and graphene, but is not limited thereto.

For example, the amorphous carbon may have an average particle diameter (D₅₀) of 150 nm or less. In the present disclosure, the average particle diameter of the amorphous carbon may be measured by SEM or a particle size analyzer. In another example, the amorphous carbon may have an average particle diameter of 140 nm or less, 130 nm or less, 120 nm or less, 110 nm or less, 100 nm or less, 90 nm or less, 80 nm or less, 70 nm or less, 60 nm or less, or 50 nm or less, or 10 nm or more, 20 nm or more, 30 nm or more, or 40 nm or more. By controlling the average particle diameter of the amorphous carbon to the above range, lithium ions may move well during charging/discharging, thereby enabling uniform precipitation between the anode current collector and the anode-free coating layer.

For example, the amorphous carbon may have a BET specific surface area in the range of 10 m²/g to 200 m²/g. In the present disclosure, a BET specific surface area of the amorphous carbon may be measured by a method of BET method (a method of Brunauer, Emmett and Teller), which is generally used. In another example, the amorphous carbon has a BET specific surface area of 20 m²/g or more, 30 m²/g or more, 40 m²/g or more, or 50 m²/g or more, or 150 m²/g or less, 100 m²/g or less, 70 m²/g or less or 60 m²/g or less.

The second layer may, for example, further comprise a binder.

As the binder comprised in the second layer, for example, an aqueous binder, an organic-based binder, or a combination thereof may be used. The binder may be, for example, polyvinyl alcohol, carboxymethylcellulose, hydroxypropylcellulose, diacetylcellulose, polyvinylidene fluoride, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or a combination thereof. As the aqueous binder, for example, styrene butadiene rubber, carboxymethylcellulose, or a combination thereof may be used. As the organic-based binder, for example, polytetrafluoroethylene, polyvinylidene fluoride, or a combination thereof may be used.

For example, in the second layer, the binder may be included in the range of 0.1 to 20 parts by weight based on 100 parts by weight of amorphous carbon. The weight ratio may mean a value calculated based on dry weight. For the second layer, in another example, the binder may be included in an amount of 0.5 part by weight or more, 1 part by weight or more, 1.5 parts by weight or more, 2 parts by weight or more, 2.5 parts by weight or more, 3 parts by weight or more, 3.5 parts by weight or more, 4 parts by weight or more, 4.5 parts by weight or more, 5 parts by weight or more, 5.5 parts by weight or more, 6 parts by weight or more, 6.5 parts by weight or more, 7 parts by weight or more, 7.5 parts by weight or more, 8 parts by weight or more, 8.5 parts by weight or more, or 9 parts by weight or more, or 18 parts by weight or less, 16 parts by weight or less, 14 parts by weight or less, 12 parts by weight or less, or 10 parts by weight or less, based on 100 parts by weight of amorphous carbon.

For example, the second layer may further comprise an element capable of forming an alloy with lithium. The element that may form the alloy with lithium may be, for example, gold, silver, zinc, tin, indium, silicon, aluminum, or bismuth, but is not limited thereto, and any element that may form an alloy with lithium in the art may be used.

The anode assembly of the present disclosure may further comprise a third layer between the first layer and the second layer, and the third layer may comprise a lithiophilic material.

The lithiophilic material may be a material capable of forming a compound or an alloy with lithium, and may include one or more selected from the group consisting of Al, Ag, SiO₂, Si₃N₄, Ni, Au, Cr, Cu, Ti, Pt, TiW, TiN, Sn, W, Al₂O₃, AIN, or InAl, but not limited thereto.

The third layer may be formed on the first layer and/or the second layer by vapor deposition, and the vapor deposition may be performed by conventionally known method thereof.

The third layer may have a thickness in the range of 10 nm to 990 nm. In the present disclosure, the thickness of the third layer may be measured, for example, by SEM, but not limited thereto. In another example, the thickness of the third layer may be 20 nm or more, 30 nm or more, 40 nm or more, 50nm or more, 60 nm or more, 70 nm or more, 80 nm or more, 90 nm or more, 100 nm or more, 110 nm or more, 120 nm or more, 130 nm or more, 140 nm or more, 150 nm or more, 160 nm or more, 170 nm or more, 180 nm or more, 190 nm or more, 200 nm or more, 210 nm or more, 220 nm or more, 230 nm or more, or 240 nm or more, or 950 nm or less, 900 nm or less, 850 nm or less, 800 nm or less, 750 nm or less, 700 nm or less, 650 nm or less, 600 nm or less, 550 nm or less, 500 nm or less, 450 nm or less, 400 nm or less, 350 nm or less or 300 nm or less. By controlling the thickness of the third layer in the above range, an all-solid-state battery having high charge/discharge efficiency and capacity retention rate may be provided.

In the anode assembly of the present disclosure, the second layer may further comprise a lithiophilic material. The lithiophilic material may be the same as the above-described lithiophilic material. The lithiophilic material included in the second layer may be the same as or different from the lithiophilic material included in the third layer.

The anode assembly of the present disclosure may further comprise, for example, a thin film comprising an element capable of forming an alloy with lithium. The thin film may be included between the anode current collector and the coating layer, on a surface opposite to the solid electrolyte layer in the two surfaces of the coating layer, and/or between the first layer and the second layer in the coating layer. The element capable of forming an alloy with lithium included in the thin film may comprise one of the above described examples, or composed of various types of alloys.

The thickness of the thin film may be, for example, 1 to 800 nm, 10 to 700 nm, 50 to 600 nm, or 100 to 500 nm. The thin film may be formed, for example, by a vacuum deposition method, a sputtering method, a plating method, or the like, but is not limited thereto, and any method capable of forming a thin film in the art may be possible.

As the anode current collector, a known metal usable as a current collector of an all-solid-state battery may be used. As the anode current collector, a material that does not form an alloy and a compound with lithium, for example, may be used. The material used as the anode current collector may be, but are not limited to, selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), stainless steel, and the like, and may be any of those used as an electrode current collector in the art unless it is contrary to the purpose of the present disclosure. The anode current collector may be composed of one of the above-described metals, or may be composed of an alloy or a covering material of two or more types of metals. The anode current collector may be, for example, in a plate shape, a mesh shape, or a foil shape, but is not limited thereto. The thickness of the anode current collector may be, for example, 1 *µ*m to 50 *µ*m, but is not limited thereto.

The anode assembly of the present disclosure may further comprise a metal and/or a metal layer thereof including lithium or a lithium alloy (also referred to in the present disclosure as "lithium (alloy)" or "lithium (alloy) layer"), by charging, for example, between the anode current collector and the coating layer, between the solid electrolyte layer and the coating layer, or on the first layer, on the second layer, and/or between the first layer and the second layer constituting the coating layer. The lithium alloy may include, for example, Li-Al alloy, Li-Sn alloy, Li-In alloy, Li-Ag alloy, Li-Au alloy, Li-Zn alloy, Li-Ge alloy, Li-Si alloy, or the like, but not limited thereto, and may be any of lithium alloy used in the art. The lithium (alloy) or lithium (alloy) layer formed or included between the anode current collector and the coating layer, between the solid electrolyte layer and the coating layer, and on the first layer, the second layer, and/or between the first layer and the second layer may be composed of one or more of the above listed alloys, or lithium.

The anode assembly of the present disclosure may further comprise the lithium (alloy) or the lithium (alloy) layer as described above by charging, for example, between the anode electrode current collector and the solid electrolyte layer, for example, between the first layer and the second layer. Although a clear mechanism has not been revealed in the present disclosure, when lithium diffused toward the anode passes through the second layer during charging, or lithium is absorbed into the second layer and then exceeds the charging capacity, lithium may be precipitated between the first layer and the second layer to form a lithium (alloy) layer. In this case, according to the present disclosure, the second layer may serve as a protective layer for suppressing side reactions and short circuit between lithium and a solid electrolyte layer to be described later, and also allow lithium to be more stably plated between the first layer and the second layer due to its lithium-affinitive properties, thereby contributing to forming a more even and dense metal layer between the first layer and the second layer during the charging process. Accordingly, the all-solid-state battery to which the anode assembly of the present disclosure is applied may realize excellent charge/discharge efficiency and capacity retention rate.

The thickness of the lithium (alloy) layer may be, for example, in the range of 1 *µ*m to 1000 µm, 1 *µ*m to 500 *µ*m, 1 *µ*m to 200 µm, 1 *µ*m to 150 *µ*m, 1 *µ*m to 100 *µ*m, or 1 *µ*m to 50 *µ*m. It is necessary to control the thickness as described above in order for the lithium (alloy) layer to function well as a lithium storage and to improve the cycle characteristics.

The region, such as between the anode current collector and the anode-free coating layer, between the solid electrolyte layer and the coating layer, on the first layer, on the second layer, and/or between the first layer and the second layer constituting the coating layer, may be, for example, a lithium-free region that does not include lithium in an initial state or a post-discharge state of the all-solid-state battery.

A second aspect of the present disclosure relates to an all-solid-state battery.

Unless otherwise described, the matters related to the first aspect of the present disclosure may be similarly applied to the matters related to the second aspect.

As described above, "all-solid-state battery" may be an all-solid secondary battery, and may be referred to as a cell, a secondary battery, a battery, or the like.

The present disclosure may relate to an all-solid-state battery comprising a cathode, a solid electrolyte layer, and the anode assembly.

The all-solid-state battery may be an anodeless all-solid-state battery which uses lithium or a lithium alloy as an anode active material. The anodeless all-solid-state-battery refers to an all-solid-battery which may include anode-free region where a separate anode active material layer is not formed on an anode current collector during battery manufacturing process, and lithium (alloy) which would function as an anode active material is precipitated on the anode current collector during charging process of the all-solid-state battery.

The cathode may comprise, for example, a cathode current collector, and a cathode active material layer formed on the cathode current collector. The cathode active material layer may comprise, for example, at least one cathode active material selected from the group consisting of lithium transition metal oxide, nickel sulfide, copper sulfide, lithium sulfide, iron oxide, and vanadium oxide. The lithium transition metal oxide may be lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate or a combination thereof, without being limited thereto, and any of those used as a cathode active material in the art may be possible. The cathode active materials may be used alone or in a combination of two or more.

The lithium transition metal oxide may be a compound represented by one of LiₐA_{1-b}B_{b}D₂(wherein 0.90≤a≤1, and 0≤b≤0.5); LiₐNi_{1-b-c}Co_{b}B_{c}O_{2-α}F₂(wherein 0.90≤a≤1, 0≤b≤0.5, 0≤c≤0.05, and 0 <α<2); LiₐNi_{1-b-c}Mn_{b}B_{c}D_{α}(wherein 0.90≤a≤1, 0≤b≤0.5, 0≤c≤0.05, and 0≤α≤2); LiₐNi_{1-b-c}Co_{b}B_{c}D_{α}(wherein 0.90≤a≤1, 0≤b≤0.5, 0≤c≤0.05, and 0<α≤2); LiₐE_{1-b}B_{b}O_{2-c}D_{c}(wherein 0.90≤a≤1, 0≤b≤0.5, and 0≤c≤0.05); LiE_{2-b}B_{b}O_{4-c}D_{c}(wherein 0≤b≤0.5, and 0≤c≤0.05); LiₐNi_{1-b-c}Co_{b}B_{c}O_{2-α}F_{α}(wherein 0.90≤a≤1, 0≤b≤0.5, 0≤c≤0.05, and 0<α<2); LiₐCoG_{b}O₂(wherein 0.90≤a≤1, and 0.001≤b≤0.1); LiₐMnG_{b}O₂(wherein 0.90≤a≤1, and 0.001≤b≤0.1); LiₐMn₂GbO₄(wherein 0.90≤a≤1, and 0.001≤b≤0.1); LiₐNi_{1-b-c}Mn_{b}B_{c}O_{2-α}F_{α}(wherein 0.90≤a≤1, 0≤b≤0.5, 0≤c≤0.05, and 0<α<2); LiₐNi_{1-b-c}Mn_{b}B_{c}O_{2-α}F₂(wherein 0.90≤a≤1, 0≤b≤0.5, 0≤c≤0.05, and 0<α<2); LiₐNi_{b}E_{c}G_{d}O₂(wherein 0.90≤a≤1, 0≤ b≤0.9, 0≤c≤0.5, and 0.001≤d≤0.1); LiₐNi_{b}Co_{c}Mn_{d}GeO₂(wherein 0.90≤a≤1, 0≤b≤0.9, 0≤c≤0.5, 0 ≤d≤0.5, and 0.001≤e≤0.1); LiₐNiG_{b}O₂(wherein 0.90≤a≤1, and 0.001≤b≤0.1); QO₂; QS₂; LiOS₂; V₂O₅; LiV₂O₅; LiIO₂; LiNiVO₄; Li_{(3- f)}J₂(PO₄)₃(0≤f≤2); Li_{(3-f)}Fe₂(PO₄)₃(0≤f≤2); and LiFePO₄. In such compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

As the cathode active material, the above said compounds having a cathode coating layer on at least a portion of a surface thereof, or a mixture of such compounds with and without the cathode coating layer may be used. The cathode coating layer added to the surface of such a compound may include, for example, a lithium ion conductive oxide. The lithium ion conductive oxide may include, for example, LiNbO₃, Li₄Ti₅O₁₂, Li₃PO₄, or the like, but is not limited thereto. The compound constituting the cathode coating layer may be amorphous or crystalline. For the method of forming the cathode coating layer, a spray coating method or an immersion method, for example, may be considered, but the method may be selected without limitation within a range that does not adversely affect the properties of the cathode active material.

When the cathode active material is a ternary lithium transition metal oxide including nickel (Ni) such as NCA or NCM, it may be possible to increase the capacity density of the all-solid-state battery to reduce metal elution of the cathode active material in a charged state. Accordingly, the cycle characteristics in the charging state of the all-solid-state battery may be improved.

The shape of the cathode active material may be, for example, a particle shape such as a sphere, an elliptical sphere, etc. The particle diameter of the cathode active material is not particularly limited, and may be within a range applicable to the cathode active material of a conventional all-solid secondary battery. The amount of the cathode active material of the cathode is also not particularly limited, and may be within a range applicable to the cathode of a conventional all-solid secondary battery.

The cathode active material layer may further comprise, for example, a solid electrolyte, a binder, and/or a conductive material.

The solid electrolyte included in the cathode active material layer may be, for example, the same as or different from the solid electrolyte included in the solid electrolyte layer to be described later. The solid electrolyte included in the cathode active material layer may be an inorganic electrolyte such as a sulfide-based solid electrolyte, an oxide-based solid electrolyte, a phosphate-based solid electrolyte, a halide-based solid electrolyte, or the like, or a polymer electrolyte, but is not limited thereto, and may be those generally used in all-solid-state batteries.

The solid electrolyte included in the cathode active material layer may have, for example, a smaller average particle diameter than the solid electrolyte included in the solid electrolyte layer. For example, the average particle diameter of the solid electrolyte included in the cathode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the cathode active material layer may be, for example, at least one selected from the group consisting of acrylonitrile butadiene rubber (ABR), butadiene rubber (BR), styrene butadiene rubber (SBR), polytetrafluoroethylene, polyvinylidene fluoride, polyethylene, or the like, but is not limited thereto.

The conductive material included in the cathode active material layer may be, for example, at least one selected from the group consisting of graphite; carbon black such as acetylene black, ketjen black, channel black, furnace black, lamp black, thermal black, and the like; or carbon fiber.

In addition, the cathode active material layer may further include, for example, fillers, coating agents, dispersing agents, ion-conducting aids, or the like, and any additives may be used as long as they are known materials generally used for electrodes of all-solid-state batteries.

The cathode may further include, for example, a cathode current collector. As the cathode current collector, a known metal usable as a current collector of an all-solid-state battery may be used. The cathode current collector may be, for example, a plate, a mesh, or a foil made of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The cathode current collector may be omitted as the case may be.

In addition to the above-described configuration, the cathode may further include known configurations that may be included in the cathode in the all-solid-state battery.

The solid electrolyte layer may include, for example, at least one of solid electrolytes that may be included in the above-described cathode active material layer. From the viewpoint of implementing excellent ion conductivity and high energy density, the solid electrolyte layer may include, for example, a sulfide-based solid electrolyte.

The solid electrolyte layer may include, for example, a sulfide-based solid electrolyte. The sulfide-based solid electrolyte may be, for example, at least one selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q}, wherein p and q are positive numbers, and M is one of P, Si, Ge, B, Al, Ga, and In, Li₂S-SiS₂-P₂S₅-LiI, Li₂S-P₂S₅, Li₂S-P₂S₅-LiX, wherein X is a halogen element, Li₂S-B₂S₃, Li₂S-P₂S₅-ZₘSₙ, wherein m and n are positive numbers, and Z is one of Ge, Zn or Ga, Li₂S-GeS₂, Li₇₋ₓPS₆₋ₓClₓ (0≤x≤2), Li₇₋ₓPS₆₋ₓBrₓ(0≤x≤2) and Li₇₋ₓPS₆₋ₓIₓ(0≤x≤2). The sulfide-based solid electrolyte may be prepared by, for example, treating a starting raw material such as Li₂S or P₂S₅ by a melt quenching method or a mechanical milling method. In addition, after such a treatment, heat treatment may be performed. The solid electrolyte may be amorphous, crystalline, or a mixed state thereof. In the present disclosure, the sulfide-based solid electrolyte may include, for example, at least sulfur (S), phosphorus (P), and lithium (Li) as constituent elements among the sulfide-based solid electrolyte materials described above.

The sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).In particular, the sulfide-based solid electrolyte may be an argyrodite-type compound including at least one selected from Li₆PS₅Cl, Li₆PS₅Br, and Li₆PS₅I.

The density of the argyrodite-type solid electrolyte may be, for example, 1.5 to 2.0 g/cc. Since the argyrodite-type solid electrolyte has a density of 1.5g/cc or more, internal resistance of the all-solid secondary battery may be reduced, and penetration of the solid electrolyte by Li may be effectively suppressed.

The solid electrolyte layer may include, for example, a binder. The binder included in the solid electrolyte layer may be, for example, one of the type of the binder included in the cathode active material layer, but is not limited thereto, and may be any of those used as a binder in the art. The binder included in the solid electrolyte layer may be the same as or different from the binder included in the above-described cathode active material layer and/or anode-free coating layer.

The thickness of the solid electrolyte layer may be 10 *µ*m to 100 *µ*m. In another example, the thickness of the solid electrolyte layer may be 20 *µ*m or more, *30 µ*m or more, or 40 *µ*m or more, or 90 *µ*m or less, 80 *µ*m or less, 70 *µ*m or less, or *60 µ*m or less, but is not limited thereto.

The all-solid-state battery of the present disclosure, for example, may be characterized in that a charge and discharge efficiency is 90% or more. The charge/discharge efficiency may follow the method according to an assessment example to be described later. In another example, the all-solid-state battery of the present disclosure may exhibit the charge and discharge efficiency of 91% or more or 92% or more, and the upper limit may be 100% or less or 95% or less, although not particularly limited.

The all-solid-state battery of the present disclosure, for example, may be characterized in that a capacity retention rate after 50 cycles is 80% or more. In the present disclosure, the capacity retention rate after 50 cycles may follow the method according to an assessment example to be described later. In another example, the all-solid-state battery of the present disclosure may have a capacity retention rate after 50 cycles of 81% or more, 82% or more, 83% or more, 84% or more, 85% or more, 86% or more, 87% or more, 88% or more, 89% or more, 90% or more, 91% or more, 92% or more, 93% or more, 94% or more, 95% or more, 96% or more, or 100% or less, 99% or less, 98% or less, or 97% or less.

The all-solid-state battery of the present disclosure, for example, may be characterized in that a specific capacity after 50 cycles is 150 mAh/g or more. In the present disclosure, an assessment of the specific capacity after 50 cycles may follow the method according to an example to be described later. In another example, the all-solid-state battery of the present disclosure may have a specific capacity after 50 cycles of 155 mAh/g or more, 160 mAh/g or more, or 165 mAh/g or more, or 300 mAh/g or less, 250 mAh/g or less, or 200 mAh/g or less.

A third aspect of the present disclosure relates to a method for manufacturing an anode assembly.

Unless otherwise described, the matters related to the first aspect and/or the second aspect of the present disclosure may be similarly applied to the matters related to the third aspect.

**A** method for manufacturing an anode assembly of the present disclosure may comprise the steps of: forming a first layer and a second layer on an anode current collector, wherein the first layer comprises a lithium halide, LiX, where X is a halogen element, and the second layer comprises amorphous carbon.

For the method of forming the first layer and the second layer on the anode current collector, a conventionally known method of forming a thin film on an anode current collector may be used without any limitation.

For example, the method of forming the first layer and the second layer on the anode current collector may comprise a method selected from the group consisting of direct gravure coating, micro gravure coating, slot die coating, comma coating, gravure coating, bar coating, roll coating, slide coating, evaporation deposition, chemical vapor deposition (CVD), and physical vapor deposition, but any conventionally known method may be applied without any limitation.

Specifically, the method for manufacturing an anode assembly may include forming the first layer comprising LiX, where X is a halogen element, on the anode current collector and forming the second layer comprising amorphous carbon on the first layer.

For another example, forming the first layer on the anode current collector may be conducted through a deposition. The deposition may be selected from, for example, evaporation deposition, chemical vapor deposition (CVD), and physical vapor deposition, but is not limited thereto, and various deposition methods used in the art may be used.

The present disclosure may contribute to the improvement of energy density of an all-solid-state battery by forming the first layer on an anode current collector by the deposition as above, which is no more than a predetermined range in thickness, and may exhibit excellent charging/discharging efficiency and capacity retention rate by not including any other component than LiX.

The step of forming the second layer comprising amorphous carbon on the first layer may be characterized by comprising, for example, applying a slurry comprising amorphous carbon onto the first layer and/or drying the slurry.

The slurry may further comprise, for example, a binder. The matters related to the binder comprised in the slurry may be similarly applied to the matters related to the binder comprised in the second layer of the first aspect described above.

The slurry may further comprise, for example, an element capable of forming an alloy with lithium.

The slurry may further comprise, for example, a solvent. The solvent may be water, N-methylpyrrolidone (NMP), or the like, but is not limited thereto. The solvent may be evaporated through a step of drying, and accordingly, may not be included in the finally formed second layer, or may be included in a trace amount.

The application may be performed by, for example, a direct gravure coating, micro gravure coating, slot die coating, comma coating, gravure coating, bar coating, roll coating, or slide coating, but is not limited thereto, and may be performed by a method known in the art.

The drying step may be characterized by comprising, for example, a first drying step and/or a second drying step.

The first drying step may be performed, for example, in air.

The first drying step may be performed, for example, at a temperature of 60°C to 100°C. In another example, the first drying step may be performed at a temperature of 70°C to 90°C or a temperature of 75°C to 85°C.

The first drying step may be performed, for example, for 10 to 30 minutes. In another example, the first drying step may be performed for 15 to 25 minutes.

The second drying step may be performed, for example, under a vacuum condition.

The second drying step may be performed, for example, at a temperature of 80°C to 120°C. In another example, the second drying step may be performed at a temperature of 90°C to 110°C or a temperature of 95°C to 105°C.

The second drying step may be, for example, performed for 10 to 15 hours. In another example, the second drying step may be performed for 11 to 13 hours.

Hereinafter, the present disclosure will be described in detail with reference to Examples in order to specifically explain the disclosure of the present disclosure as described above and the actions and effects intended in the present disclosure. However, the Examples may be modified into various other forms, and the scope of the present disclosure is not interpreted to be limited to the Examples only. It is emphasized that the Examples are provided as representative of the invention to those skilled in the art to describe the present disclosure in more detail.

### Example

Using an equipment, LiF was deposited to a thickness of 250 nm on a SUS foil having a thickness of 10 *µ*m. Next, 6 g (average particle diameter of 41 nm, BET specific surface area of 51m²/g) of carbon black, 9.33 g of PVDF solution (solid content of 6%) and 7.19 g of NMP solution were put in a thinky mixer container, and mixed 12 times at 2000 rpm for 3 minutes, and then 5 g of NMP solution was additionally introduced thereto and mixed 5 times at 2000 rpm for 3 minutes to prepare a slurry. Subsequently, the slurry is coated on the LiF deposition layer (a surface opposite to the surface in contact with the SUS foil) using a bar coater, dried at 80°C in air for 20 minutes, and vacuum-dried at 100°C for 12 hours.

Through this, an anode assembly where a LiF deposition layer (a first layer) having a thickness of 250 nm and an amorphous carbon-including layer (a second layer) having a thickness of 10 *µ*m were formed on the SUS foil was obtained.

### Cathode

LiNi_{0.8}Co₀₋₁₅Mn_{0.05}O₂ (NCM) as a cathode active material, Li₆PS₅Cl, an argyrodite-type crystal, as a solid electrolyte, polytetrafluoroethylene (Teflon binder, Dupont) as a binder, and carbon nanofibers (CNF) as a conductive agent were prepared. Subsequently, the materials were mixed in a weight ratio of cathode active material: solid electrolyte: conductive agent: binder = 84:15:0.2:1.2, and the mixture was formed to have a large size in a sheet form, thereby preparing a cathode sheet. In addition, this cathode sheet was pressed against an aluminum foil cathode current collector having a thickness of 18 *µ*m to produce a cathode.

The initial charge capacity (charge capacity at the first cycle) of the manufactured cathode was about 20 mAh for 4.25V charging. The cathode weight was about 110 mg (about 203 mAh/g per weight of the active material).

### Solid Electrolyte Layer

The solid electrolyte layer including a Li₆PS₅Cl solid electrolyte was used.

### All-Solid-State Battery

The cathode, solid electrolyte layer, and anode assembly were laminated and sealed in a pouch in a vacuum state to prepare an all-solid-state battery. At this time, the thickness of the solid electrolyte layer was 50 *µ*m. Meanwhile, after each parts of the cathode current collector and the anode current collector protrude out of the pouch so that the vacuum of the battery may be maintained, these projections were used as positive and negative terminals. In addition, this all-solid-state battery was hydraulic-treated at 500 MPa for 30 minutes. By performing such hydrostatic pressure treatment, the characteristics as a battery are greatly improved.

### Comparative Example 1

An all-solid-state battery was obtained in the same manner as in Example except that when manufacturing the anode-free coating layer, the first layer was not formed.

### Comparative Example 2

An all-solid-state battery was obtained in the same manner as in Example except that when manufacturing the anode-free coating layer, the second layer was not formed.

### Comparative Example 3

An all-solid-state battery was obtained in the same manner as in Example, except that when manufacturing the anode-free coating layer, to form the first layer, a slurry obtained by mixing LiF powder and PVDF at a weight ratio of 95:5 was coated on a SUS foil having a thickness of 10 *µ*m using a bar coater, instead of deposition, to have a thickness of 10 *µ*m.

### Assessment Example. Mini-Monocell Cycle Characteristics

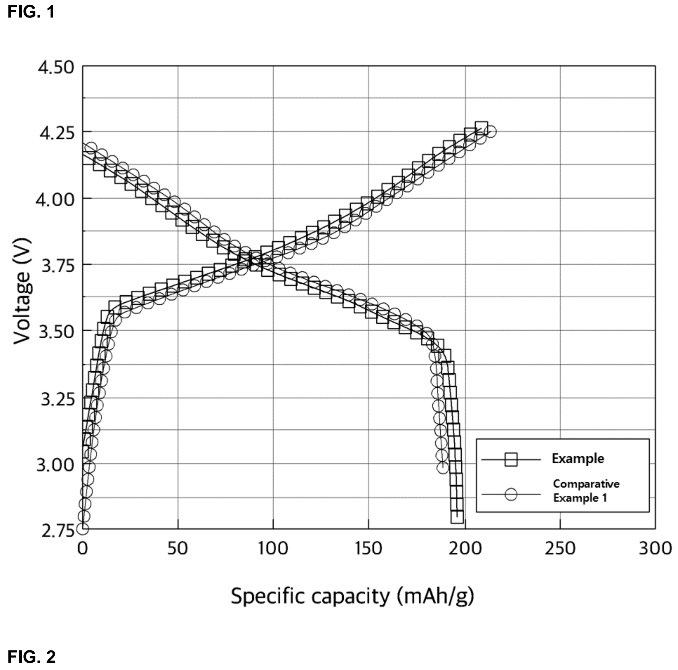

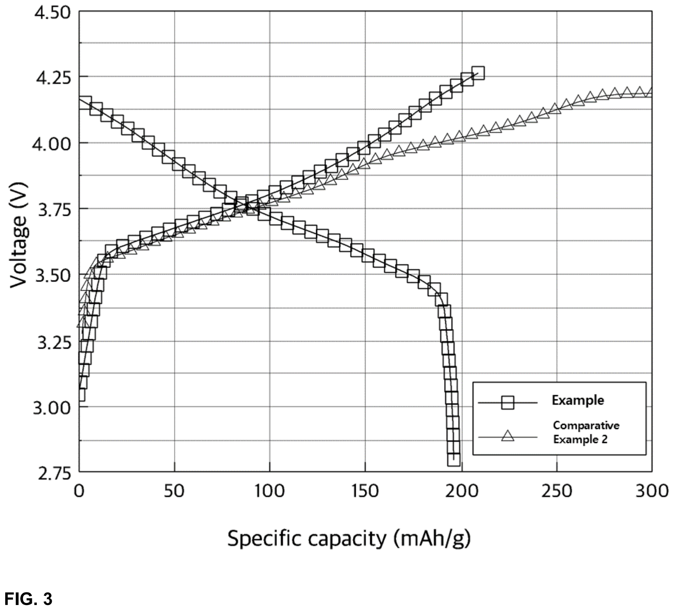

All solid-state batteries (pouch type monocells) of the above Example and Comparative Examples 1 to 3 were driven at a working voltage range of 4.25V-3.0V and a driving temperature of 45°C under the following charge/discharge conditions to assess high rate charge/discharge characteristics, and the results thereof are shown in Table 1 and FIGS. 1 to 3 below.
Charge Conditions: 0.1C, 4.25V CC/CV, 0.05C cut-off
Discharge Conditions: 0.1C, 3.0V, CC

**[Table 1]**

| Classification | Charge capacity (mAh/g) | Discharge capacity (mAh/g) | Efficiency (%) |
|---|---|---|---|
| Example | 212.5 | 195.9 | 92.2 |
| Comparative Example 1 | 213.8 | 188.8 | 88.3 |
| Comparative Example 2** | - | - | |
| Comparative Example 3 | 269.1 | 159.5 | 59.3 |

| | | | |
|---|---|---|---|
| * The efficiency means a ratio of the discharge capacity to the charge capacity. ** In Comparative Example 2, a short circuit occurred during the charging process, and thus measurement was impossible. | | | |

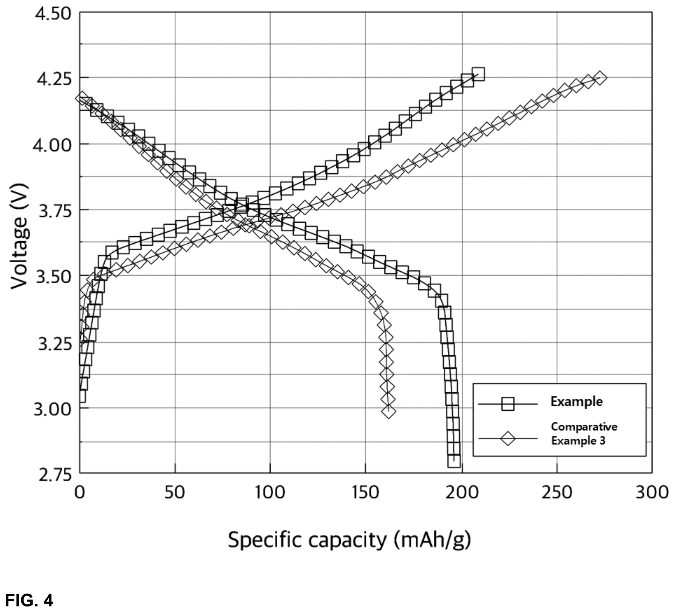

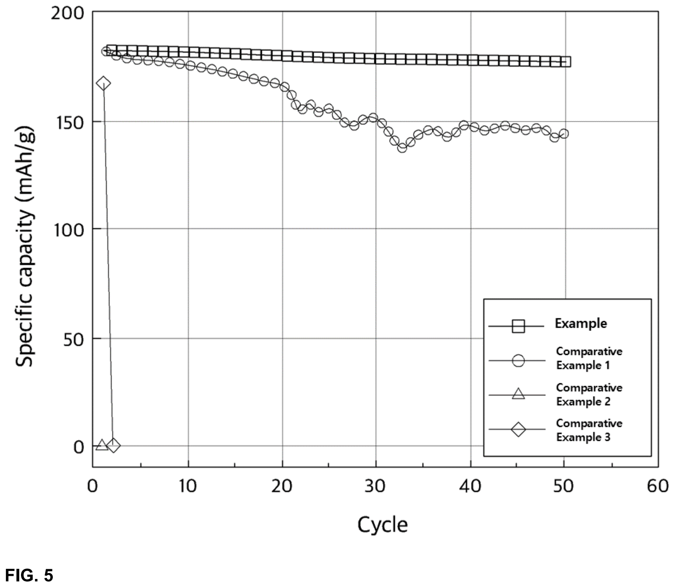

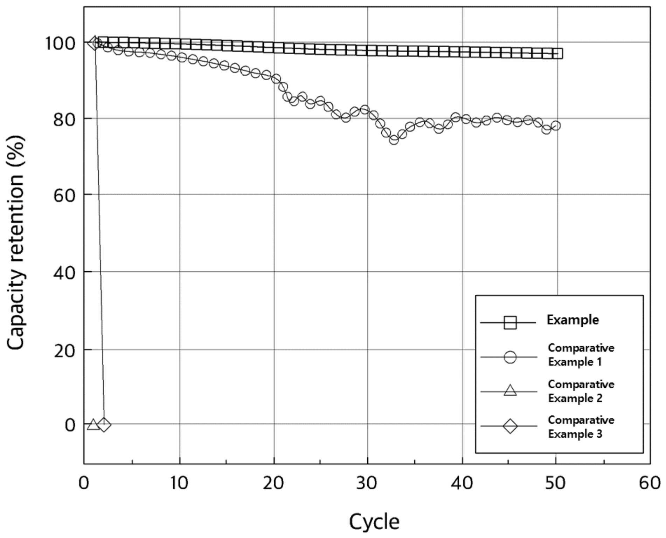

In addition, all-solid-state batteries (pouch-type monocells) of the above Example and Comparative Examples 1 to 3 were driven at the same working voltage range and driving temperature under the following charge/discharge conditions to assess the specific capacity and capacity retention rate after 50 cycles, and the results thereof are shown in Table 2 and FIGS. 4 and 5 below.
Charge Conditions: 0.33C, 4.25V CC/CV, 0.1C cut-off
Discharge Conditions: 0.33C, 3.0V, CC

**[Table 2]**

| Classification | Capacity retention rate after 50 cycles (%) |
|---|---|
| Example | 96.9 |
| Comparative Example 1 | 79.3 |
| Comparative Example 2* | - |
| Comparative Example 3** | - |

| | |
|---|---|
| In Comparative Example 2, a short circuit occurred during the charging process of the first cycle, and thus measurement was impossible. ** In Comparative Example 3, a short circuit occurred during the charging process of the second cycle, and thus measurement was impossible. | |

As a result, it was confirmed that the charging/discharging efficiency of the first cycle of Example was higher than that of Comparative Examples, and the specific capacity and capacity retention rate according to the cycle were also excellent. Specifically, Example showed an efficiency of 92.2% at the first cycle, a specific capacity after 50 cycles of 150 mAh/g or more, and capacity retention rate after 50 cycles of 96.9%.

## Claims

1. An anode assembly comprising:
a first layer comprising a lithium halide, LiX, where X is a halogen element;
a second layer comprising amorphous carbon; and
an anode current collector.

2. The anode assembly of claim 1, wherein the first layer consists essentially of LiX.

3. The anode assembly of claim 1, wherein the first layer includes 96 wt% or more of LiX based on a total weight of the first layer.

4. The anode assembly of claim 1, wherein the first layer is more adjacent to the anode current collector than the second layer.

5. The anode assembly of claim 1, wherein a thickness of the first layer is in the range of 10 nm to 990 nm.

6. The anode assembly of claim 1, wherein a thickness of the second layer is in the range of 1 *µ*m to 50 *µ*m.

7. The anode assembly of claim 1, wherein a ratio of a thickness of the second layer to a thickness of the first layer is in the range of 10 to 200.

8. The anode assembly of claim 1, wherein LiX is lithium fluoride (LiF) or lithium chloride (LiCl).

9. The anode assembly of claim 1, wherein the amorphous carbon is one or more selected from the group consisting of carbon black, acetylene black, furnace black, ketjen black, and graphene.

10. The anode assembly of claim 1, wherein the second layer further comprises a binder.

11. The anode assembly of claim 1, wherein the anode assembly further comprises a third layer between the first layer and the second layer, and
wherein the third layer comprises a lithiophilic material.

12. The anode assembly of claim 11, wherein a thickness of the third layer is in the range of 10 nm to 990 nm.

13. The anode assembly of claim 1, wherein the second layer further comprises a lithiophilic material.

14. An all-solid-state battery comprising:
a cathode;
a solid electrolyte layer; and
the anode assembly according to any one of claims 1 to 13.

15. The all-solid-state battery of claim 14, wherein the all-solid-state battery is an anodeless all-solid-state battery which uses lithium or a lithium alloy as an anode active material.

16. The all-solid-state battery of claim 14, wherein the solid electrolyte layer comprises a sulfide-based solid electrolyte.

17. The all-solid-state battery of claim 15, wherein the sulfide-based solid electrolyte is one or more selected from the group consisting of Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-Li₃PO₄, Li₂S-SiS₂-LiₚMO_{q} (p and q are positive numbers, and M is P, Si, Ge, B, Al, Ga, or In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is Ge, Zn or Ga), Li₂S-GeS₂, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

18. The all-solid-state battery of claim 14, wherein the all-solid-state battery has a charge and discharge efficiency of 90% or more.

19. The all-solid-state battery of claim 14, wherein the all-solid-state battery has a capacity retention rate after 50 cycles of 90% or more.

20. A method for manufacturing an anode assembly, the method comprising:
forming a first layer and a second layer on an anode current collector,
wherein the first layer comprises a lithium halide, LiX, where X is a halogen element, and the second layer comprises amorphous carbon.
